# EUROPEAN PATENT APPLICATION

(11) **EP 1 594 208 A2**
(43) Date of publication of application: **09.11.2005**
(21) Application number: 05103523.6
(22) Date of filing: 28.04.2005
(51) Int. Cl.: H02H 9/00, H03H 1/00

(54) **Transient Block and Terminator Assembly**

(30) Priority: 06.05.2004 US 839352
(71) Applicant: PVA Enterprises Corporation, LaGrange Park, Illinois 60525 (US)
(72) Inventor: PENNINGTON, Donald G, IL 60526, LaGrange Park (US)
(74) Representative: Wright, Hugh Ronald

(57) **Abstract**

A transient block and terminator assembly is provided for attenuating high frequency transients generated on an earth ground from being fed back up to an electrical load reference ground. The termination assembly includes a housing block, an input electrical connector, an output electrical connector, and a tuned inductive filter assembly. The input electrical connector is connected to a first end of the housing block and is connectable to the earth ground. The output electrical connector is connected to a second end of the housing block and is connectable to the electrical load reference ground. The tuned inductive filter assembly is disposed in the housing block and is electrically coupled between the earth ground and the electrical load reference ground for attenuating the high frequency transients generated on the earth ground from being fed back up to the electrical load reference ground.

## Description

### BACKGROUND OF THE INVENTION

This invention relates generally to transient elimination or suppression systems. More particularly, it relates to a transient block and terminator assembly for interconnection between an earth ground and an electrical load reference ground for attenuating high frequency transients generated on the earth ground from being fed back up to the electrical load reference ground.

As is generally known to those in the industry, modern electrical and electronic circuits in equipment such as in microprocessors and computer systems have been made with higher operating speeds and with reduction in physical sizes due to advances in technology. Semiconductor integrated circuit device or chip manufacturers have also made products with higher and higher densities by adding more and more circuits onto a single I.C. chip. As a result, the smaller circuits with increased densities have a lower tolerance to electrical interference in the forms of voltage surges, transients, atmospheric discharges (i.e., lightning strikes), and electrical impulses that are induced into building electrical distribution. These impulses go directly into the electronic system via the power supply or case ground. High energy transients may also come from many other sources such as inductive or capacitive loads, including motors switching on/off, heat pumps, elevator controls, laser printers, computer disk drives, irrigation systems, solenoids cycling, and even the common telephone lines.

In every building structure, there exists a presence of grounding for all equipment, both physically and electrically. In some installations of the equipment, it has been noted that many of the cabinets which house the electronic circuits are coupled to earth or case ground by way of the power supplies. These power supplies use the building electrical ground (earth or case ground) as a reference point for all of the voltages supplied to the electrical and electronic circuits (CPU, memory, hard disk, modem cards and security systems) in the equipment. This earth or case ground is tied directly to all of the system components for UL safety as well as for internal and external communication. However, this earth or case ground is the source of a major problem since it creates a control path for the electrical interference which results in system failure and in many circumstances intolerable Adowntime.≅ While there has been developed surge strips and power conditioners in the prior art for protecting the line and neutral wires of a three-wire circuit, they offer no protection against voltage transients coming up the common ground wire (the third wire of the three-wire circuit) and back into sensitive electronic circuits and/or security systems.

In U.S. Patent No. 6,385,029 to Donald G. Pennington issued on May 7, 2002, and entitled ATotal Electrical Transient Eliminator,≅ which is assigned to the same assignee as the present invention, there is disclosed an apparatus for attenuating high frequency transients on AC power lines from damaging sensitive electrical and electronic circuits in an electrical load coupled to the AC power line. The AC power line has an earth ground and the electrical load has an electrical load ground. An isolation transformer is provided which has a primary winding and a secondary winding. The primary winding has a primary source lead, a primary neutral lead, and a primary electrostatic shield lead. The secondary winding has a secondary source lead, a secondary neutral lead, and a secondary electrostatic shield lead. The primary source lead, primary neutral lead, and primary electrostatic shield lead are electrically coupled to the AC power lines.

The secondary source lead, secondary neutral lead, and secondary electrostatic shield lead are electrically coupled to the electrical load. The primary electrostatic shield lead and the secondary electrostatic shield lead are electrically connected together and to the earth ground. A continuous attenuator circuit is used to attenuate high frequency transients in the frequency range of 50 KHz to 200 MHz electrically coupled between the earth ground and the electrical load ground. This >029 patent is hereby incorporated by reference in its entirety.

It would therefore be desirable to provide a transient block and terminator assembly for interconnection between an earth ground and an electrical load reference ground for attenuating high frequency transients generated on the earth ground from being fed back up to the electrical load reference ground. It would also be expedient that the terminator assembly be easy to install and is formed of a compact mechanical package which can fit in a relatively small space.

### SUMMARY OF THE INVENTION

Accordingly, we will describe a transient block and terminator assembly for attenuating high frequency transients generated on an earth ground from being fed back up to an electrical load reference ground.

We will describe a transient block and terminator assembly for interconnection between an earth ground and an electrical load reference ground for attenuating high frequency transients in the range of 50 KHz to 5 GHz generated on the earth ground from being fed back up to the electrical load reference ground.

We will describe a transient block and terminator assembly which is of a relatively simple construction and is easy to install.

We will describe a transient block and terminator assembly for attenuating high frequency transients which is formed of a compact mechanical package that can fit in a relatively small space.

We will describe a transient block and terminator assembly for attenuating high frequency transients which includes a housing block, an input electrical connector coupled to an earth ground, an output electrical connector coupled to an electrical load reference ground, and a tuned inductor filter assembly disposed in the housing block and being electrically coupled between the earth ground and the electrical load reference ground for attenuating high frequency transients generated on the electrical ground from being fed back up to the electrical load reference ground.

We will describe a transient block and terminator assembly for interconnection between an earth ground and electrical load reference ground for attenuating high frequency transients generated on the earth ground from being fed back up to the electrical load reference ground. The termination assembly includes a housing block having a first end and a second end. An input electrical connector is connected to the first end of the housing block by a first flexible line cord. The input electrical connector has a first line lead, a first neutral lead, and a first common ground lead. The first common ground lead is connectable to the earth ground. An output electrical connector is connected to the second end of the housing block by a second flexible line cord. The output electrical connector has a second line lead, a second neutral lead, and a second common ground lead. The second common ground lead is connectable to the electrical load reference ground.

A tuned inductive filter assembly is disposed in the housing block and is electrically coupled between the earth ground and the electrical load reference ground for attenuating high frequency transients generated on the earth ground from being fed back up to the electrical load reference ground. The tuned inductive filter assembly is formed of at least one toroid core. A single continuous strand of wire is wound around a predetermined number of turns around the at least one toroid core. The strand of wire has a first end connected to the first common ground lead of the input electrical connector and has a second end connected to the second common ground lead of the output electrical connector.

### BRIEF DESCRIPTION OF THE DRAWINGS

These and other objects and advantages of the present invention will become more fully apparent from the following detailed description when read in conjunction with the accompanying drawings with like reference numerals indicating corresponding parts throughout, wherein:
Figure 1 is a pictorial, perspective view of a transient block and terminator assembly, constructed in accordance with the principles of the present invention;
Figure 2 is a cross-sectional view, taken along the lines 2-2 of Figure 1;
Figure 3 is a cross-sectional view, taken along the lines 3-3 of Figure 1;
Figure 4 is a pictorial, perspective view of a second embodiment of a transient block and terminator assembly in accordance with the present invention;
Figure 4A is a pictorial, perspective view of a third embodiment of a transient block and terminator assembly of the present invention;
Figure 5 is a bottom view, taken along the lines 5-5 of Figure 4;
Figure 6 is a view similar to Figure 5, but with the epoxy and lead wires removed;
Figure 7 is a detailed diagram of the tuned inductive filter assembly for use in the terminator assembly of Figures 1-3;
Figure 8 is a detailed diagram of the tuned inductive filter assembly for use in the terminator assembly of Figures 4-6;
Figure 9 is a block diagram, illustrating one application of the terminator assembly of Figures 4-6; and
Figure 10 is a detailed diagram of an alternate embodiment of a tuned inductive filter assembly for use with a semiconductor I. C. chip.

### DESCRIPTION OF THE PREFERRED EMBODIMENTS

Reference is now made in detail to the specific embodiments of the present invention that illustrate the best modes presently contemplated by the inventor for practicing the invention. It should be understood that the description of the best modes are merely illustrative and that they should not be taken in a limiting sense.

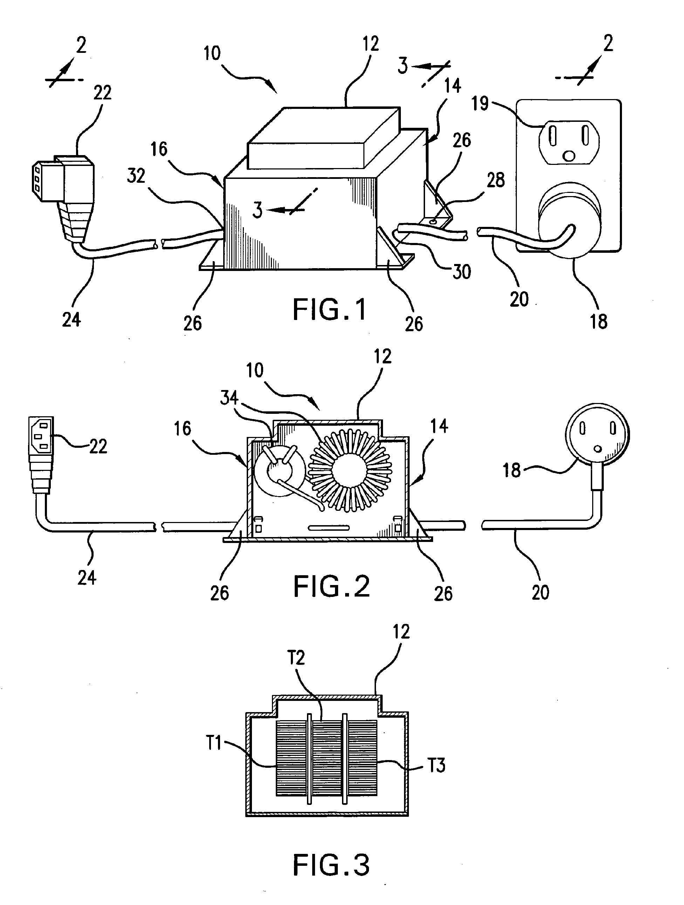

Referring now in detail to the various views of the drawings, there is shown in Figure 1 a pictorial, perspective view of a transient block and terminator assembly 10, constructed in accordance with the principles of the present invention, for interconnection between an earth ground and electrical load reference ground for attenuating high frequency transients generated on the earth ground from being fed back up to the electrical load reference ground. As previously mentioned, there is a presence of grounding of all equipment, both physically and electrically, in every building structure. The cabinets which house the electronic circuits are typically coupled through the electrical load reference ground to the earth or case ground by way of the power supplies. These power supplies use the building electrical ground (earth or case ground) as a reference point for all of the voltages supplied to the electrical and electronic circuits (CPU, memory, hard disk, modem cards and security systems) in the equipment. This earth or case ground takes the physical form of a common ground wire of an electrical connector which can be an AC ground wire, a DC ground wire, or an electrical DC bus structure of a printed circuit board. Unfortunately, the earth or case ground is susceptible to high frequency transients which travel up the common ground wire and back into the sensitive electrical circuits and/or security equipment via the electrical load reference ground.

In order to attenuate the high frequency transient voltages and currents generated in the common ground line from being fed back up to the electrical load reference or floating ground, the present transient block and terminator assembly 10 is interconnected between the earth ground and the electrical load reference ground. The transient block and terminator assembly 10 includes a housing block 12 having a first end 14 and a second end 16, an input electrical connector 18 connected to the first end 14 via flexible line cord 20, and an output electrical connector 22 connected to the second end 16 via a flexible line cord 24.

The housing block 12 is formed of a substantially cubic-shape, black-molded case which is made of a high impact plastic material such as polypropylene. The case has a length of about 65 mm (2 1/2 inches), a width of about 55 mm (2 1/8 inches), and a height of about 55 mm (2 1/8 inches). For mounting the case, there are provided four mounting feet 26 each having an aperture 28 therein which are disposed adjacent the four bottom corners of the case 12.

The input electrical connector 18 may be formed of any conventional three-prong electrical male plug having a line lead L1, a neutral lead N1 and a common ground lead CG1, such as type Plug EL-601A, for connection into a wall outlet 19 which provides a source of AC power in the United States. It should be apparent that other type plugs such as Plug EL-215A or EL-216 or the like may be used for accommodating a wall outlet which provides a source of AC power in Europe. The input electrical connector 18 is joined to the case 12 by the line cord 20 extending through a round opening 30 in the case.

The output electrical connector 22 may be formed of any conventional three-prong female plug having a line lead L2, a neutral lead N2, and a common ground lead CG2, such as type Plugs EL-701, EL-702, EL-712 and the like for connection into electrical or electronic equipment such as a computer. Similarly, the output electrical connector 22 is joined to the case by the line cord 24 extending through a round opening 32 in the case.

The housing block or case 12 is used to enclose a tuned inductive filter assembly 34 which is encapsulated therein by a black epoxy filler or the like. The filter assembly 34 is designed to attenuate high frequency transients in the range of 50 KHz to 5 GHz that appear on the common ground wire connected to the earth ground before they reach the electrical load reference ground to which are coupled the sensitive electronic circuits. It should be apparent to those skilled in the art that the present upper frequency end of 5 GHz is not a limit since the upper frequency end will become higher and higher as the speeds of electronic devices, controls, microprocessors, and semiconductor integrated circuit chips increase in operating speeds.

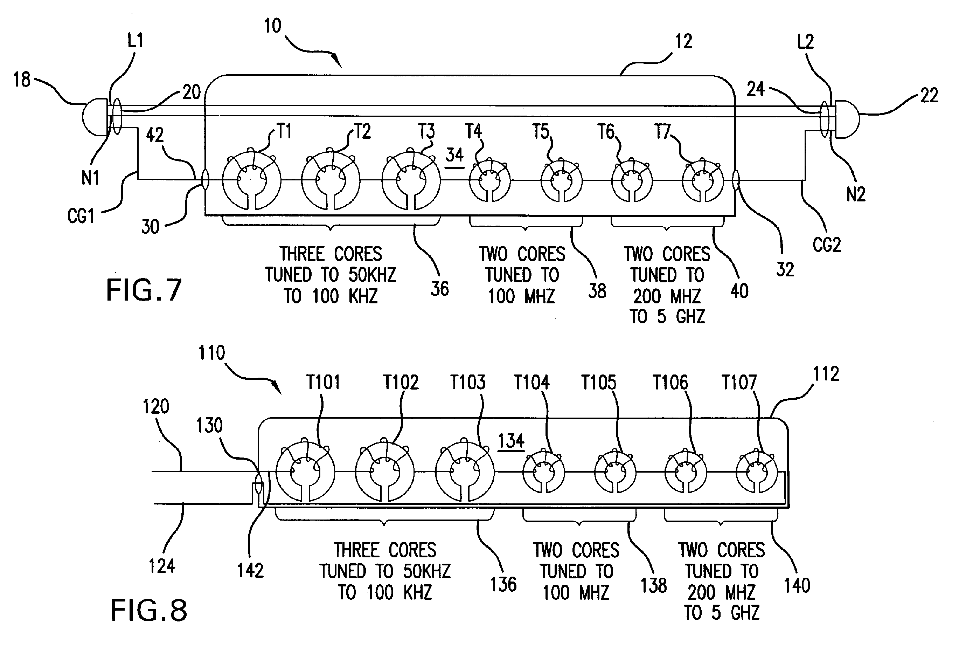

Figure 2 is a cross-sectional view of the transient block and terminator assembly 10, taken along the lines 2-2 of Figure 1. Figure 3 is a cross-sectional view of the transient block and terminator assembly, taken along the lines 3-3 of Figure 1. Figure 7 is a detailed diagram of the tuned inductive filter assembly 34 for use in the terminator assembly of Figures 1-3. In the preferred embodiment of Figure 7, the filter assembly 34 is formed of three sections 36, 38 and 40. The first section 36 includes three larger series-connected toroids T1, T2 and T3 which are tuned to a frequency range between 50 KHz and 100 KHz. The second section 38 includes two smaller series-connected toroids T4 and T5 which are tuned to a frequency of about 100 MHz. The third section 40 includes also two smaller series-connected toroids T6 and T7 which are tuned to a frequency range between 200 MHz and 5 GHz or higher.

Each of the toroids T1-T3 is formed of a large cylindrical core which is made from iron powder, MMP, or crystalline material. Each of the three larger cores has an outer diameter dimension of 33 mm (1.44 inches) and an inner diameter dimension of 19.5 mm (0.77 inches). Each of the four toroids T4 through T7 is formed of a smaller cylindrical core which is also made from iron powder, MMP, or crystalline material. Each of the four smaller cores has an outer diameter dimension of 20 mm (0.79 inches) and an inner diameter dimension of 12 mm (0.47 inches). It should be understood that the diameter of the cores is dependent upon the magnitude of the high frequency transients to be attenuated or reduced.

While the cores of the toroids T1-T7 are shown to be cylindrical in shape, it should be apparent that other shapes may also be used. Further, the toroids may be of a split ring type. In addition, the number of toroids could be just a single one or more than the seven shown, depending upon the frequency, magnitude, and bandwidth of the high frequency transients to be eliminated. A single long continuous copper strand of magnetic wire 42 is wound continuously and sequentially a predetermined number of turns through each of the seven cores of the toroids T1-T7 which are disposed in close proximity to each other in either an end-to-end, side-by-side, or stacked fashion. Each of the three larger cores is preferably wound with 80-140 turns of a No. 18 AWG (American Wire Gauge) and each of the four smaller cores is preferably wound with a single turn.

As can be seen from Figure 7, one end of the copper wire 42 adjacent to the toroid T1 extends through the round opening 30 in the case 12 and is connected by the common ground lead CG1 of the line cord 20 to the input male plug connector 18. This common ground lead CG1 is connectable to the earth ground via the connector 18. The other end of the copper wire 42 adjacent to the toroid T7 extends through the round opening 32 in the case 12 and is connected by the common ground wire CG2 of the line cord 24 to the output female plug connector 22. The common ground lead CG2 is connectable to the electrical load reference or floating ground via the connector 22. It can be seen that the line lead L1 and the neutral lead N2 of the line cord 20 are simply routed through the case 12 and are then connected to the respective line lead L2 and the neutral lead N2 of the line cord 24. While the wire size of the copper wire 42 is indicated to be a No. 18 AWG size in the preferred embodiment, it should be clearly understood by those skilled in the art that the wire size may be varied from 2 AWG to 28 AWG or even smaller in order to attenuate the high frequency signals that occur in the common ground wire.

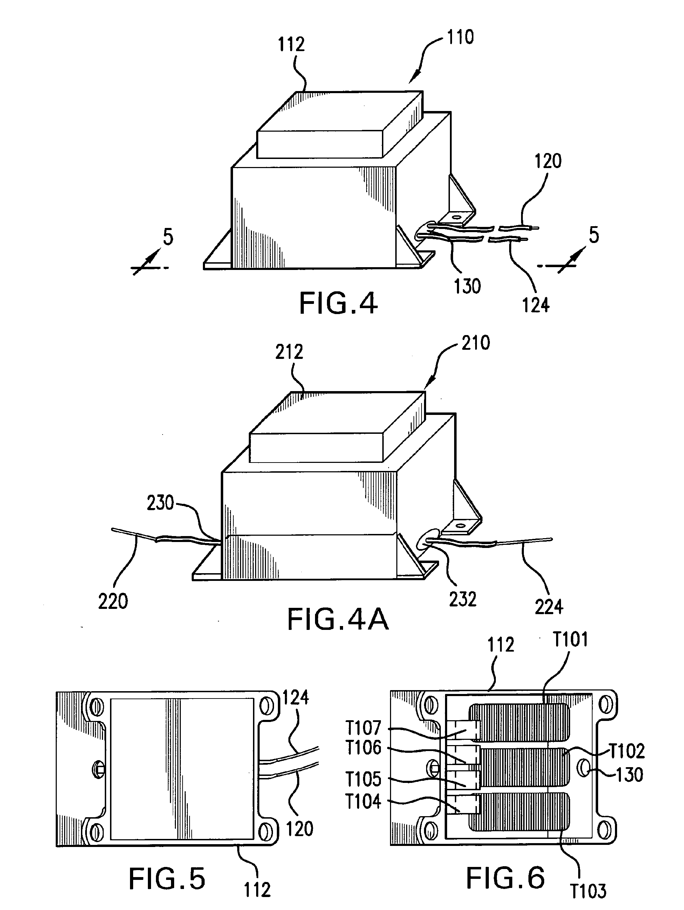

In Figure 4, there is illustrated a perspective view of a second embodiment of a transient block and terminator assembly 110 for attenuating high frequency transients in accordance with the present invention. The transient block and terminator assembly 110 is substantially identical in its construction to the terminator assembly 10 of Figure 1, except that the electrical connectors 18, 22 and line cords 20, 24 have been replaced with a pair of lead wires 120, 124 extending through a single round opening 130 in the case 112. The case 112 is the same as the case 12 of Figure 1 and houses a tuned inductive filter assembly 134. One end of the lead wire 120 is connected to one end of the filter assembly 134, and the other end thereof is connectable to the earth or case ground of a building structure via a power supply. One end of the lead wire 124 is connected to the other end of the filter assembly 134, and the other end thereof is connectable to the electrical load reference or floating ground of the sensitive electronic equipment such as the computer. Typically, each of the lead wires 120, 124 is approximately 4-8 inches long and is a No. 18 AWG size which is formed with insulation.

Figure 5 is a bottom view of the transient block and terminator assembly 110, taken along the lines 5-5 of Figure 4. Figure 6 is a view similar to Figure 5, but with the epoxy and lead wires 120, 124 removed. Figure 8 is a detailed diagram of the tuned inductive filter assembly 134 for use in the terminator assembly 110 of Figures 4-6. The filter assembly 134 is formed of three sections 136, 138 and 140. The first section 136 includes three larger series-connected toroids T101, T102 and T103 which are tuned to a frequency range between 50 KHz and 100 KHz. The second section 138 includes two smaller seriesl-connected toroids T104 and T105 which are tuned to a frequency of about 100 MHz. The third section 140 includes also two smaller series-connected toroids T106 and T107 which are tuned to a frequency range between 200 MHz and 5 GHz or higher. Since each of the toroids T101 through T107 are constructed and interconnected identically to the respective toroids T1-T7, a detailed description thereof will not be repeated.

As can best be seen from Figure 8, one end of the copper wire 142 adjacent to the toroid T101 extends through the round opening 130 in the case 112 and is connected to the lead wire 120. The other end of the copper wire 142 adjacent to the toroid T107 also extends through the same round opening 130 and is connected to the lead wire 124. In this manner, it will be noted that the transient block and terminator assembly 110 is interconnectable between the earth or case ground via the lead wire 120 and the electrical load reference ground via the lead wire 124 for attenuating the ground transients caused by induced lightning or by inductive and capacitive loads.

In Figure 4A, there is illustrated a perspective view of a third embodiment of transient block and terminator assembly 210 for attenuating high frequency transients in accordance with the present invention. The transient block and terminator assembly 210 is substantially identical in its construction to the terminator assembly 110 of Figure 4, except that the pair of lead wires 120,124 extending through a single round opening 130 in the case 112 have been replaced with a first lead wire 220 and a second lead wire 224. The first lead wire 220 extends through a round opening 230 on one side of the case 212. The second lead wire 224 extends through a round opening 232 on the opposite side of the case 212. One end of the first lead wire 220 is connected to one end of a tuned inductive filter assembly, and the other end thereof is connectable to the earth or case ground of a building structure via a power supply. One end of the second lead wire 224 is connected to the other end of the filter assembly, and the other end thereof is connectable to the electrical load reference or floating ground of the sensitive electronic equipment. Typically, each of the lead wires 220, 224 is approximately 4-8 inches long and is a No. 18 AWG size which is formed with insulation.

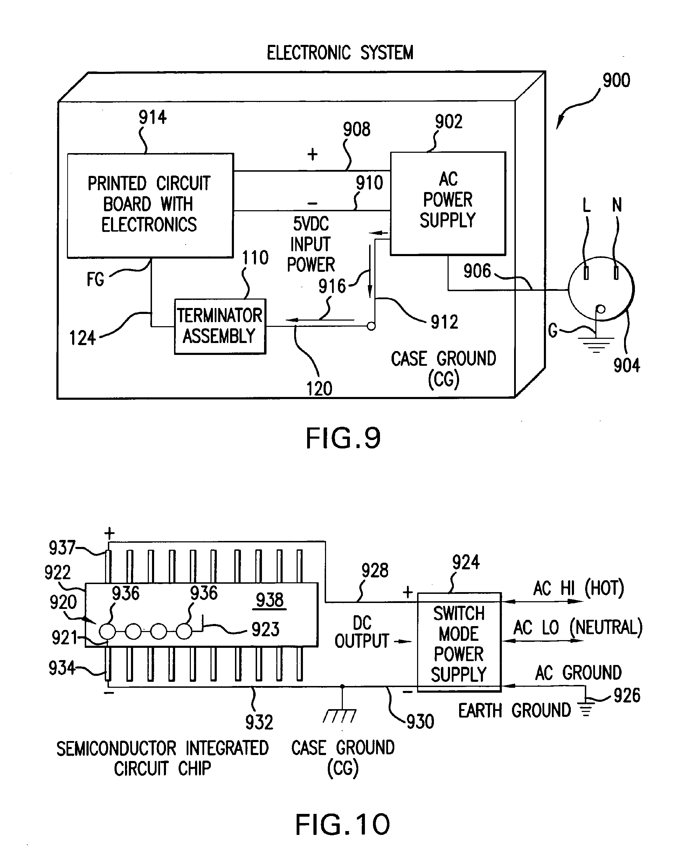

With reference to Figure 9, there is depicted in block diagram form one application of the terminator assembly 110 of Figures 4-6 used in practice for attenuating high frequency transients in accordance with the present invention. In an electronic or electrical system 900 there is included an AC power supply 902 which is connected to an AC input source via a three-prong plug connector 904 and a line cord 906. The three-prong connector 904 has a line lead L, a neutral lead N, and an earth ground lead G. The earth ground **G** is coupled through the power supply 902 to a case ground **CG** by way of a common ground wire 912. The power supply 902 provides a source of DC power on lines 908, 910 to electronic circuits on a printed circuit board 914. The transient block and terminator assembly 110 of the present invention is interconnected between the case ground CG via the lead wire 120 and the electrical load reference or floating ground FG associated with the printed circuit board 914 via the lead wire 124. The terminator assembly 110 is used to attenuate induced voltage transients coming up the earth ground lead **G** in the direction of arrows 916 and back into the electrical circuits on the printed circuit board via the electrical load reference or floating ground FG.

With reference to Figure 10 of the drawings, there is depicted detailed diagram of an alternate embodiment of a tuned inductive filter assembly 920 for use with a semiconductor I. C. device or chip 922 for attenuating high frequency transients in accordance with the present invention. A switch mode power supply 924 is provided which has a line lead AC Hi, a neutral lead AC Lo, and an earth ground lead AC Ground that are connectable to an AC input source. The earth ground lead AC Ground is coupled through the power supply 924 to a case ground CG by way of a common ground wire 926. The power supply 924 provides a source of DC power on lines 928,930 to sensitive electrical circuitry such as a microprocessor, A/D converter, D/A converter, or other similar type circuits on the semiconductor I.C. chip 922. The tuned inductive filter assembly 920 of the present invention is interconnected between the case ground CG via a lead wire 932 and an electrical load reference or floating ground associated with the semiconductor I.C. chip 922. The filter assembly 920 is used to attenuate induced voltage transients coming up the earth ground lead AC Ground and travelling back into the sensitive electrical circuitry on the semiconductor I.C. chip 922.

As can be seen, one end 921 of the filter assembly 920 is connected to the negative pin (-) 934 of the chip 922 and the other end 923 thereof is connectable to the electrical load reference or floating ground. The line 928 (+) from the power supply 924 is connected to the positive pin (+) 937 of the chip 922. In this instance, the filter assembly 920 is comprised of a series of small circular elements 936 each having a predetermined inductance value. The circular elements 936 are made from a iron powder, MMP, or crystalline material which is sprayed onto the top surface 938 of the semiconductor I.C. chip 922. The number of circular elements could be just a single one or any number dependent upon the frequency and energy levels of the high frequency transients to be eliminated. In addition, it should be noted that the value of the inductance for each element could be varied by changing its size, shape and/or thickness.

From the foregoing detailed description, it can thus be seen that the present invention provides a transient block and terminator assembly for attenuating high frequency transients generated on an earth ground from being fed back up to an electrical load reference ground. The terminator assembly includes a housing block, an input electrical connector, an output electrical connector, and a tuned filter inductor assembly. The input electrical connector is connected to a first end of the housing block and is connectable to the earth ground. The output electrical connector is connected to a second end of the housing block and is connectable to the electrical load reference ground. The tuned inductive filter assembly is disposed in the housing block and is electrically coupled between the earth ground and the electrical load reference ground for attenuating high frequency transients generated on the earth ground from being fed back up to the electrical load reference ground.

While there has been illustrated and described what is at present considered to be a preferred embodiment of the present invention, it will be understood by those skilled in the art that various changes and modifications may be made, and equivalents may be substituted for elements thereof without departing from the true scope of the invention. In addition, many modifications may be made to adapt a particular situation or material to the teachings of the invention without departing from the central scope thereof. Therefore, it is intended that this invention not be limited to the particular embodiment disclosed as the best mode contemplated for carrying out the invention, but that the invention will include all embodiments falling within the scope of the appended claims.

## Claims

1. A transient block and terminator assembly for attenuating high frequency transients generated on an earth ground from being fed back up to an electrical load reference ground, said terminator assembly comprising:
a housing block having a first end and a second end;
an input electrical connector connected to the first end of said housing block by a first flexible line cord;
said input electrical connector having a first line lead, a first neutral lead, and a first common ground lead, said first common ground lead being connectable to the earth ground;
an output electrical connector connected to the second end of said housing block by a second flexible line cord;
said output electrical connector having a second line lead, a second neutral lead, and a second common ground lead, said second common ground lead being connectable to the electrical load reference ground;
tuned inductive filter means disposed in said housing block and being electrically coupled between the earth ground and the electrical load reference ground for attenuating high frequency transients generated on the earth ground from being fed back up to the electrical load reference ground; and
said tuned inductive filter means being formed of at least one toroid core and a single continuous strand of wire being wound around a predetermined number of turns around said at least one toroid core, said strand of wire having first end connected to said first common ground lead of said input electrical connector and having a second end connected to said second common ground lead of said output electrical connector.

2. A transient block and terminator assembly as claimed in Claim 1, wherein said housing block is formed of a black-molded case which is made of a high impact plastic material.

3. A transient block and terminator assembly as claimed in Claim 1, wherein said input electrical connector is a three-prong electrical male plug which is connectable to a source of AC power.

4. A transient block and terminator assembly as claimed in Claim 1, wherein said output electrical connector is a three-prong electrical female plug which is connectable into electrical equipment.

5. A transient block and terminator assembly as claimed in Claim 1, wherein said filter means is encapsulated in said housing block by a black epoxy filler.

6. A transient block and terminator assembly as claimed in Claim 1, wherein said filter means is formed of seven toroid cores and the strand of wire is wound continuously and sequentially a predetermined number of turns around each of said seven toroid cores.

7. A transient block and terminator assembly as claimed in Claim 6, wherein a first three of seven toroid cores are tuned to a frequency range between 50 KHz and 100 KHz, a second two of said seven toroid cores are tuned to a frequency of 100 MHz, and a third two of said seven toroid cores are tuned to a frequency range of between 200 MHz and 5 GHz or higher.

8. A transient block and terminator assembly as claimed in Claim 6, wherein said first three of said seven toroid cores are made larger and are wound with 80-140 turns of a No. 18 AWG size and said second and third two of seven toroid cores are made smaller and are wound with a single turn of the No. 18 AWG size.

9. A transient block and terminator assembly as claimed in Claim 6, wherein each of said seven toroid cores is made of one of iron powder, MMP, and crystalline material.

10. A transient block and terminator assembly for attenuating high frequency transients generated on an earth ground from being fed back up to an electrical load reference ground, said terminator assembly comprising:
a housing block;
a first lead wire joined to said housing block and being connectable to the earth ground;
a second lead wire joined to said housing block and being connectable to the electrical load reference ground;
tuned inductive filter means disposed in said housing block and being electrically connectable between the earth ground and the electrical load reference ground for attenuating high frequency transients; and
said tuned inductive filter means being formed of at least one toroid core and a single continuous strand of wire being wound around a predetermined number of turns around said at least one toroid core, said strand of wire having a first end connected to said first lead wire and having a second end connected to said second lead wire.

11. A transient block and terminator assembly as claimed in Claim 10, wherein said housing block is formed of a black-molded case which is made of a high impact plastic material.

12. A transient block and terminator assembly as claimed in Claim 10, wherein said filter means is encapsulated in said housing block by a black epoxy filler.

13. A transient block and terminator assembly as claimed in Claim 10, wherein said filter means is formed of seven toroid cores and the strand of wire is wound continuously and sequentially a predetermined number of turns around each of said seven toroid cores.

14. A transient block and terminator assembly as claimed in Claim 13, wherein a first three of seven toroid cores are tuned to a frequency range between 50 KHz and 100 KHz, a second two of said seven toroid cores are tuned to a frequency of 100 MHz, and a third two of said seven toroid cores are tuned to a frequency range of between 200 MHz and 5 GHz or higher.

15. A transient block and terminator assembly as claimed in Claim 13, wherein said first three of said seven toroid cores are made larger and are wound with 80-140 turns of a No. 18 AWG size and said second and third two of seven toroid cores are made smaller and are wound with a single turn of the No. 18 AWG size.

16. A transient block and terminator assembly as claimed in Claim 13, wherein each of said seven toroid cores is made of one of iron powder, MMP, and crystalline material.

17. A tuned inductive filter assembly comprising:
at least one toroid core;
a single continuous strand of wire being wound around a predetermined number of turns around said at least one toroid core; and
said strand of wire having a first end being connectable to an earth ground and having a second end being connectable to an electrical load reference ground.

18. A transient block and terminator assembly as claimed in Claim 17, wherein there is provided seven toroid cores and the strand of wire is wound continuously and sequentially a predetermined number of turns around each of said seven toroid cores.

19. A transient block and terminator assembly as claimed in Claim 18, wherein a first three of seven toroid cores are tuned to a frequency range between 50 KHz and 100 KHz, a second two of said seven toroid cores are tuned to a frequency of 100 MHz, and a third two of said seven toroid cores are tuned to a frequency range of between 200 MHz and 5 GHz or higher.

20. A transient block and terminator assembly as claimed in Claim 18, wherein said first three of said seven toroid cores are made larger and are wound with 80-140 turns of a No. 18 AWG size and said second and third two of seven toroid cores are made smaller and are wound with a single turn of the No. 18 AWG size.

21. A tuned inductive filter assembly comprising in combination:
a semiconductor I.C. chip;
at one small circular element formed of an inductive material and disposed on the top surface of the semiconductor I.C. chip;
said small circular element having a first end connectable to an earth ground and having a second end connectable to an electrical load reference ground.
